# EUROPÄISCHE PATENTANMELDUNG

(11) **EP 1 001 232 A2**
(43) Veröffentlichungstag der Anmeldung: **17.05.2000**
(21) Anmeldenummer: 99122234.0
(22) Anmeldetag: 08.11.1999
(51) Int. Cl.: F25D 16/00, F25D 17/06, B60P 3/20

(54) **Laderaumkühlung für Kühlfahrzeuge**

(30) Priorität: 11.11.1998 DE 29820107 U
(71) Anmelder: Helios Gesellschaft für klima- und kältetechnische Anlagen mbH, 22113 Oststeinbek (DE)
(72) Erfinder: Worm, Thorsten, 21529 Kröppelshagen (DE)
(74) Vertreter: Richter, Werdermann & Gerbaulet

(57) **Zusammenfassung**

Um eine Laderaumkühlung (100) für Kühlfahrzeuge, die eine Umluftkälteanlage (12) mit einem Verdampfer aufweist, zu schaffen, die es ermöglicht, empfindliche Tiefkühlgüter ohne schädliche Temperaturschwankungen beim Be- und Entladen des Laderaums zu transportieren, wobei gleichzeitig der wirtschaftliche und effektive Betrieb der Laderaumkühlung über die gesamte Betriebsdauer gewährleistet werden soll, wird vorgeschlagen, dass die Laderaumkühlung (100) einen Pufferspeicher (19) besitzt, der im Kaltluftstrom (21) der Umluftkälteanlage (12) plaziert ist und keine direkte Verbindung mit der Umluftkälteanlage (12) aufweist.

## Beschreibung

Die Erfindung betrifft eine Laderaumkühlung für Kühlfahrzeuge, die eine Umluftkälteanlage mit einem Verdampfer aufweist.

In Kühlfahrzeugen werden heutzutage insbesondere auch besonders empfindliche Waren, wie tiefgefrorene Früchte und Speiseeis transportiert. Diese Waren vertragen im Gegensatz zu tiefgekühltem Fleisch keine abrupten Temperaturwechsel, wie beim Öffnen des Laderaums zum Be- und Entladen, da sich bei entsprechenden Witterungsverhältnissen beim Öffnen des Laderaumes Feuchtigkeit auf dem eingelagerten Tiefkühlgut, das die kühlste Stelle im Laderaum bei geöffneter Laderaumtür und außer Betrieb befindlicher Kühlung darstellt, niederschlägt und vereist.

Üblicherweise sind die Laderäume zum Transport von tiefgekühlten Gütern mit Speicherrohren mit meanderförmigen Verdampfern, die von einem Kühlrohr des Kühlkreislaufes durchzogen werden, versehen, an denen sich anschließend bei eingeschalteter Kühlanlage die Feuchtigkeit absetzt und naturgemäß vereist, wodurch ein wirtschaftliches Arbeiten der Kühlanlage verhindert wird. Es muss daher in relativ kurzen Abständen zwangsabgetaut werden, weil sonst die erforderliche Temperatur für das Kühlgut nicht eingehalten werden kann.

Es ist daher Aufgabe der Erfindung, eine Laderaumkühlung für Kühlfahrzeuge zu schaffen, die es ermöglicht, empfindliche Tiefkühlgüter ohne schädliche Temperaturschwankungen beim Be- und Entladen des Laderaums zu transportieren, wobei gleichzeitig der wirtschaftliche und effektive Betrieb der Laderaumkühlung über die gesamte Betriebsdauer gewährleistet werden soll.

Diese Aufgabe wird durch die Merkmale des Anspruchs 1 gelöst.

Dazu ist erfindungsgemäß vorgesehen, eine Laderaumkühlung für Kühlfahrzeuge, die einen Wärmetauscher bzw. eine Umluftkälteanlage mit einem Verdampfer aufweist, derart auszugestalten, dass die Laderaumkühlung einen Pufferspeicher innerhalb des Laderaums besitzt, der im Kaltluftstrom der Umluftkälteanlage befindlich ist, aber ansonsten keine direkte Verbindung zur Umluftkälteanlage aufweist, wobei im Bereich zwischen der Umluftkälteanlage und dem Pufferspeicher ein Luftleitblech angeordnet sein kann, das den Kaltluftstrom der Umluftkälteanlage nahezu vollständig zum Pufferspeicher führt.

Der Pufferspeicher wird erfindungsgemäß im Deckenbereich des Laderaumes des Kühlfahrzeuges angeordnet, während sich die Umluftkälteanlage an der Stirnwand des Laderaums befindet. Durch den Kaltluftstrom, der durch das Luftleitblech gezielt zuerst zum Pufferspeicher geführt wird, wird dieser zum kältesten Punkt im Laderaum, wenn beim Öffnen der Laderaumtür die Umluftkälteanlage die Kühlung unterbricht. Das hat zur Folge, dass sich beim Öffnen des Laderaumes die eindringende Feuchtigkeit an den Pufferspeicher niederschlägt, da diese aufgrund des Wärmegehaltes mit der sie transportierenden Luft aufsteigt.

Nach dem Schließen des Laderaums ist, bedingt durch den Betrieb der Umluftkälteanlage deren Oberfläche der kälteste Punkt im Laderaum. Durch Sublimation baut sich der Eisbelag von dem Pufferspeicher ab und verlagert sich zum Wärmetauscher. Durch eine entsprechende Betriebsweise taut der Wärmetauscher anschließend den Eisbelag ab, so dass die Flüssigkeit in Form von kleinsten Tröpfchenmengen problemlos abführbar ist.

Bei dem Pufferspeicher handelt es sich vorzugsweise um mehrere Elemente, die mit einem Kühlmittel befüllt sind, das vorzugsweise ein eutektisches Salzgemisch ist. Die Elemente sind in rastbaren Halterungen fixiert. So dass die Elemente des Pufferspeichers wieder leicht entfernt werden können, um z. B. diese über Nacht außerhalb des Kühlfahrzeuges auf die gewünschte Temperatur zu bringen oder um defekte Element auszutauschen.

Der Pufferspeicher setzt sich vorzugsweise aus mehreren lang gestreckten Elementen zusammen, die parallel zueinander angeordnet in Richtung des Kaltluftstroms der Umluftkälteanlage sind, so dass der Kaltluftstrom gut in den Zwischenräumen zirkulieren kann. Die Verwendung von mehren Elementen als Pufferspeicher bringt den wesentlichen Vorteil einer größeren Oberfläche mit sich, so dass auch größere Mengen an eingedrungener Feuchtigkeit problemlos ausgefroren werden können.

Als Element für den Pufferspeicher wird vorzugsweise ein mit eutektischer Sole befülltes Rohr verwendet, das einen rechteckigen Querschnitt besitzt und das mit korrespondierenden Halterungen an der Decke des Laderaums klemmend gehalten wird.

Die Eckbereiche der Elemente weisen abgerundete Ecken auf, so dass thermische und mechanische Belastungen besser aufgefangen werden können, da Spitzenspannungen vermieden werden und der Kraftfluss in die Wandung erfolgt.

Die erfindungsgemäße Laderaumkühlung ist vorteilhafterweise gegenüber herkömmlichen Anlagen deutlich leichter, so dass die Transportkosten durch geringeren Kraftstoffverbrauch der Kühlfahrzeuge gesenkt werden können.

Zudem kann problemlos eine Nachrüstung vorhandener Kühlfahrzeuge erfolgen.

Normalerweise, d. h. bei den bisher üblichen Anlagen, wird der Eisbelag über eine automatische Zwangsabtauung entfernt, die immer dann eingeleitet wird, wenn nach einer Wärmelast das Kühlgut wieder gekühlt werden muss, wobei bei der erfindungsgemäßen Anlage die Abtauung manuell erfolgen kann, die vorteilhafterweise nur vor und nach der Nachtabkühlung vorgenommen werden muss. Das Heizen der Laderaumkühlung zum Abtauen hat keinen Einfluss auf die Temperatur des Transportgutes, da die geringen Temperaturschwankungen im Innenraum des Laderaum weit unterhalb des Gefrierpunktes, d. h. unterhalb von Minus 20°C liegen, während bei den Diesel-Umluftkälteanlagen an der Oberfläche des Transportgutes Temperaturen um 0°C anzutreffen sind, so dass eine Schädigung eintreten kann.

Besonders vorteilhaft ist die Kältehaltung bei abgeschalteter Laderaumkühlung durch den Pufferspeicher über mehrere Stunden, so dass selbst bei einem Defekt der Anlage die Kühlung stets gewährleistet ist.

Weitere vorteilhafte Ausgestaltungen sind in den Unteransprüchen gekennzeichnet.

Nachstehend wird die Erfindung anhand von Zeichnungen näher erläutert. Es zeigen
- Fig. 1.: in einer geschnittenen Seitenansicht ein Laderaum mit einer erfindungsgemäßen Laderaumkühlung und
- Fig. 2.: in einer geschnittenen Teilrückansicht ein Laderaum mit einer erfindungsgemäßen Laderaumkühlung,

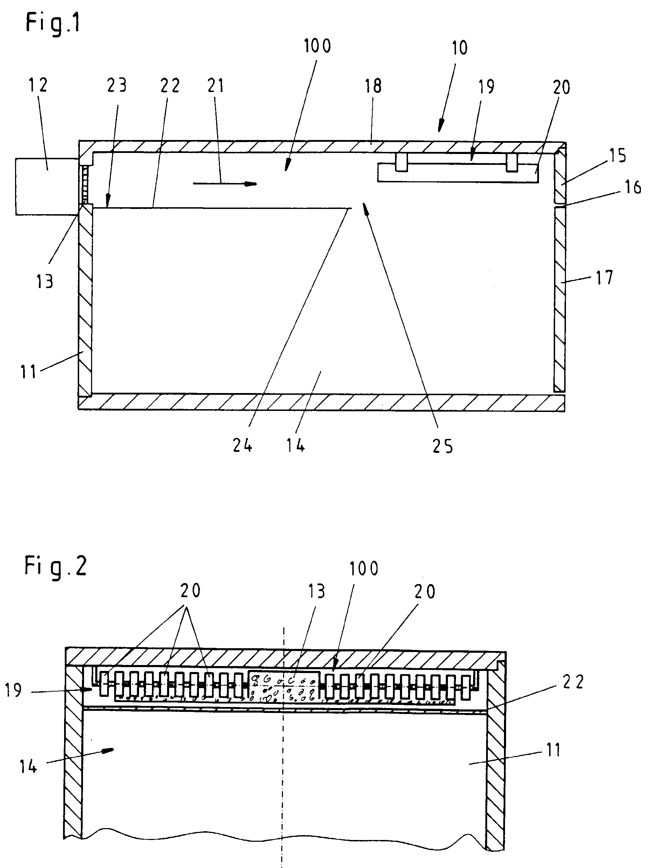

In den Fig. 1 und 2 wird ein mit einer Laderaumkühlung 100 ausgerüsteter Laderaum 10 gezeigt. Außen an der Stirnwand 11 des Laderaums 10 befindet sich im Deckenbereich eine Umluftkälteanlage 12 mit Verdampfer, der über nicht näher dargestellte Einrichtungen 13 mit dem Innenraum 14 des Laderaums 10 in Verbindung steht. Die der Stirnwand 11 gegenüberliegende Wand 15 des Laderaums 10 verfügt über eine Öffnung 16 mit Tür 17 zum Be- und Entladen. An der Decke 18 des Laderaums 10 benachbart zur Öffnung 16 ist der Pufferspeicher 19 angeordnet, der über mehrere Elemente 20 verfügt, die eine lang gestreckte, beiendseitig geschlossene Form aufweisen, und parallel zueinander befindlich sind. Die Elemente 20 des Pufferspeichers 19 bzw. deren Hauptachse verläuft von der Stirnwand 11 zur Öffnung 16, so dass der Kaltluftstrom 21 der Umluftkälteanlage 12 zwischen den einzelnen Elementen 20 des Pufferspeichers 19 hindurchstreichen kann. Um den Kaltluftstrom 21 möglichst vollständig zum Pufferspeicher 19 zu leiten ist an der Decke 18 des Laderaums 10 ein Luftleitblech 22 vorgesehen, das parallel zur Decke 18 mit Abstand angeordnet ist. Das zur Stirnwand 11 weisende Ende 23 des Luftleitblechs 22 ist direkt an die Stirnwand 11 herangeführt, während das andere Ende 24 des Luftleitblechs 22 einen Spalt 25 zum Pufferspeicher 19 lässt. Die Elemente 20 des Pufferspeichers 19 weisen einen rechteckigen Querschnitt 26 auf, wobei die Ecken 27 abgerundet sind.

### Bezugszeichenliste

- Laderaumkühlung: 100
- Laderaum: 10
- Stirnwand: 11
- Umluftkälteanlage: 12
- Einrichtung: 13
- Innenraum: 14
- Wand: 15
- Öffnung: 16
- Tür: 17
- Decke: 18
- Pufferspeicher: 19
- Element: 20
- Kaltluftstrom: 21
- Luftleitblech: 22
- Ende: 23
- anderes Ende: 24
- Spalt: 25
- Querschnitt: 26

## Patentansprüche

1. Laderaumkühlung (100) für Kühlfahrzeuge, die eine Umluftkälteanlage (12) mit einem Verdampfer aufweist, dadurch gekennzeichnet, dass die Laderaumkühlung (100) einen Pufferspeicher (19) besitzt, der im Kaltluftstrom (21) der Umluftkälteanlage (12) plaziert ist und keine direkte Verbindung mit der Umluftkälteanlage (12) aufweist.

2. Laderaumkühlung nach Anspruch 1, dadurch gekennzeichnet, dass zwischen der Umluftkälteanlage (12) und dem Pufferspeicher (19) ein Luftleitblech (22) zur gezielteren Lenkung des Kaltluftstromes (21) auf den Pufferspeicher (19) angeordnet ist.

3. Laderaumkühlung nach Anspruch 1 oder 2, dadurch gekennzeichnet, dass der Pufferspeicher (19) über eine eutektische Salzmischung als Kältemittel verfügt.

4. Laderaumkühlung nach einem der Ansprüche 1 bis 3, dadurch gekennzeichnet, dass der Pufferspeicher (19) aus mindestens zwei Elementen (20) besteht.

5. Laderaumkühlung nach Anspruch 4, dadurch gekennzeichnet, dass die Elemente (20) eine lang gestreckte Form aufweisen, zueinander parallel angeordnet sind und die Längsachse parallel zum Kaltluftstrom (21) ausgerichtet ist.

6. Laderaumkühlung nach Anspruch 5, dadurch gekennzeichnet, dass die Elemente (20) beidendseitig geschlossenen Rohre sind, die einen rechteckigen Querschnitt (26) aufweisen können, wobei die Ekken gerundet sein können.

7. Laderaumkühlung nach einem der Ansprüche 4 bis 6, dadurch gekennzeichnet, dass die Elemente (20) im Innenraum (41) Luftkammern (42) besitzen.

8. Laderaumkühlung nach einem der Ansprüche 1 bis 7, dadurch gekennzeichnet, dass der Pufferspeicher (19) an der Decke (18) eines Laderaumes (10) im Türöffnungsbereich angeordnet ist.

9. Laderaumkühlung nach einem der Ansprüche 1 bis 80, dadurch gekennzeichnet, dass die Umluftkälteanlage (12) an der Stirnwand eines Laderaumes (10) angeordnet ist, wobei der Kaltluftstrom (21) ggf. über entsprechende Einrichtungen (13) in den Laderaum (10) geleitet wird.

10. Laderaumkühlung nach einem der Ansprüche 1 bis 9, dadurch gekennzeichnet, dass zwischen der Umluftkälteanlage (12) und Pufferspeicher (19) ein Luftleitblech (22) angeordnet ist.
